(19) Europäisches Patentamt
European Patent Office
Office européen des brevets

(11) Veröffentlichungsnummer : **0 004 050**
**B2**

(12) # NEUE EUROPÄISCHE PATENTSCHRIFT

(45) Veröffentlichungstag der neuen Patentschrift : **10.09.86**

(51) Int. Cl.⁴ : **C 08 J 9/22**, C 08 L 25/04

(21) Anmeldenummer : **79100641.4**

(22) Anmeldetag : **05.03.79**

(54) **Flammgeschützte treibmittelhaltige Styrolpolymerisate und ihre Verwendung zur Herstellung von Schaumstoffen.**

(30) Priorität : **08.03.78 DE 2809979**

(43) Veröffentlichungstag der Anmeldung : **19.09.79 Patentblatt 79/19**

(45) Bekanntmachung des Hinweises auf die Patenterteilung : **25.11.81 Patentblatt 81/47**

(45) Bekanntmachung des Hinweises auf die Entscheidung über den Einspruch : **10.09.86 Patentblatt 86/37**

(84) Benannte Vertragsstaaten : **BE DE FR GB IT NL SE**

(56) Entgegenhaltungen :
**DE-A- 1 794 347**
**DE-A- 2 055 908**
**DE-A- 2 448 476**
**DE-A- 2 458 483**
**DE-A- 2 525 697**
**DE-A- 2 545 223**
**DE-B- 1 090 852**
**DE-B- 1 218 149**
**DE-B- 1 272 533**
**DE-C- 1 255 302**
**GB-A- 927 872**
**GB-A- 1 170 980**
**US-A- 3 819 547**
**Ranney: Flame Retardant Polymers 1970, Seite 31**

(73) Patentinhaber : **BASF Aktiengesellschaft**
**Carl-Bosch-Strasse 38**
**D-6700 Ludwigshafen (DE)**

(72) Erfinder : **Hahn, Klaus, Dr.**
**Burggasse 2**
**D-6840 Lampertheim (DE)**
Erfinder : **Naarmann, Herbert, Dr.**
**Haardtblick 15**
**D-6719 Wattenheim (DE)**
Erfinder : **Penzien, Klaus, Dr.**
**Bensheimer Ring 18**
**D-6710 Frankenthal (DE)**
Erfinder : **Weber, Heinz, Dr.**
**Am Wehrhaus 26**
**D-6718 Gruenstadt 1 (DE)**

**EP 0 004 050 B2**

**Beschreibung**

Es ist bekannt, daß treibmittelhaltige Styrolpolymerisate durch organische Bromverbindungen flammfest gemacht werden können. Normalerweise werden die Bromverbindungen gleichmäßig im Styrolpolymerisat verteilt. Dies kann z. B. dadurch geschehen, daß man bei der Herstellung des Styrolpolymerisats die Polymerisation der Monomeren in Gegenwart der Bromverbindung durchführt oder das Styrolpolymerisat in der Schmelze, in Lösung oder in wäßriger Suspension nachträglich mit der Bromverbindung imprägniert.

Aus den US-Patentschriften 3 058 926, 3 058 928 und 3 058 929 ist es bekannt, daß die flammhemmende Wirkung von Bromverbindungen erheblich gesteigert wird, wenn man sie zusammen mit organischen Peroxiden, also mit Verbindungen, welche labile O—O-Bindungen aufweisen, anwendet. In ähnlicher Weise wirken auch Verbindungen mit labilen C—C- und N=N-Bindungen.

Da die Anwesenheit von verhältnismäßig großen Mengen an Bromverbindungen im Styrolpolymerisat zu einer unerwünschten Beeinflussung der Produkt- und Verarbeitungseigenschaften führt, und darüber hinaus verschiedene Bromverbindungen die Polymerisation von Styrol stören, hat man auch schon versucht, das Flammschutzmittel oberflächlich auf die treibmittelhaltigen Styrolpolymerisate aufzubringen. Diese Methode hat jedoch den grundsätzlichen Nachteil, daß durch die Oberflächenbeschichtung die mechanische Festigkeit und die Verschweißung von Schaumstoffen, die aus den treibmittelhaltigen Styrolpolymerisaten hergestellt werden, verschlechtert werden. In der DE-A-1 769 803 wird daher vorgeschlagen, zur Verbesserung der Haftung der Flammschutzmittel auf den Styrolpolymerisat-Teilchen die Bromverbindung und das organische Peroxid zusammen mit einem Bindemittel mit Klebstoffeigenschaften oberflächlich auf die Teilchen aufzubringen. Diese komplizierte Arbeitsweise hat sich jedoch nicht durchsetzen können.

Aus der DE-A-1 794 347 ist bekannt, gegebenenfalls verschäumte Styrolpolymerisaten organische Bromverbindungen zuzusetzen, die im Molekül aliphatisch und cycloaliphatisch gebundenes Brom enthalten. Diese Bromverbindungen sollen besser wirksam sein als bekannte Bromverbindungen. Die organischen Bromverbindungen können in Form einer Lösung oder Suspension in einem flüchtigen organischen Lösungsmittel auf die Styrolpolymerisatteilchen aufgesprüht werden. Von einer Oberflächenbeschichtung der Styrolpolymerisatteilchen mit den Bromverbindungen oder gar von einer räumlichen Trennung von Flammschutzmittel und einem Flammschutzsynergist ist jedoch nicht die Rede.

Neuerdings sind Bromverbindungen bekanntgeworden, die bereits in sehr geringen Mengen als Flammschutzmittel wirken. Es war zu erwarten, daß auch bei oberflächlichem Aufbringen solcher Flammschutzmittel auf die treibmittelhaltigen Styrolpolymerisat-Teilchen der negative Einfluß auf die mechanischen Eigenschaften daraus hergestellter Schaumstoffe nicht mehr sehr stark ist. Derartige Formmassen sind z. B. in der DE-A-2 655 808 und in der DE-A-2 757 020 beschrieben. Es stellte sich aber auch hier die Aufgabe, die Menge an oberflächlich aufgebrachten Flammschutzmitteln noch weiter zu verringern, ohne daß jedoch die Flammschutzwirkung herabgesetzt wird. Es hat sich gezeigt, daß dies nicht erreicht werden kann, wenn man einfach auf bekannte Weise der organischen Bromverbindung einen Synergisten zumischt. Dadurch läßt sich zwar die Menge an Bromverbindung verringern, die Gesamtmenge an Oberflächenbeschichtung bleibt jedoch annähernd gleich, so daß nichts gewonnen ist.

Erfindungsgemäß wurde nun gefunden, daß die oben erwähnte Aufgabe gelöst wird wenn man bestimmte Bromverbindungen als Flammschutzmittel durch Auftrommeln oberflächlich auf die Styrolpolymerisat-Teilchen aufbringt, während eine organische Verbindung mit labiler C—C-, O—O- oder N=N-Bindung mit einer Halbwertzeit von größer als 5 Stunden, gemessen bei 100 °C in Benzol, als Flammschutzsynergist gleichmäßig in den Teilchen inkorporiert ist.

Überraschenderweise bleibt dabei die synergistische Wirkung voll erhalten, obwohl Bromverbindung und Synergist räumlich voneinander getrennt sind. Bei dem erfindungsgemäßen Zusatz des Flammschutzsynergisten braucht man wesentlich weniger der teuren Bromverbindung, um die gleiche Flammschutzwirkung zu erreichen. Ferner kommt man mit insgesamt viel weniger Oberflächenbeschichtung aus, so daß die mechanische Festigkeit von Schaumstoffen, die aus den treibmittelhaltigen Styrolpolymerisaten hergestellt werden, besser sind. Schließlich ist auch der unerwünschte Abrieb der Oberflächenbeschichtung von den Styrolpolymerisat-Teilchen, der sich bei der Verarbeitung und dem Transport kaum vermeiden läßt, geringer. Diese Vorteile bestehen auch gegenüber einer Arbeitsweise, bei der Flammschutzmittel und Flammschutzsynergist gemeinsam auf den Oberflächen der Styrolpolymerisat-Teilchen aufgebracht sind.

Als Styrolpolymerisate kommen Polystyrol und Mischpolymerisate des Styrols mit bis zu 50 Gewichtsprozent an Comonomeren in Frage. Comonomere können z. B. α-Methylstyrol, Acrylnitril sowie Ester der Acryl- oder Methacrylsäure mit Alkoholen mit 1 bis 8 Kohlenstoffatomen sein. In Betracht kommen auch schlagzäh modifizierte Styrolpolymerisate, die durch Polymerisation von Styrol, gegebenenfalls zusammen mit Acrylnitril, in Gegenwart kautschukartiger Butadien-Polymerisate hergestellt wurden.

Die Polymerisate enthalten als Treibmittel vorzugsweise flüssige oder gasförmige, organische Verbindungen, die das Polymerisat nicht lösen und deren Siedepunkt unterhalb des Erweichungspunktes

des Polymerisates liegt, z. B. aliphatische oder cycloaliphatische Kohlenwasserstoffe, wie Propan, Butan, Pentan, Hexan, Heptan, Cyclohexan, oder Halogenkohlenwasserstoffe, wie Methylchlorid, Dichlordifluormethan oder 1,2,2-Trifluor-1,1,2-trichloräthan. Es ist vorteilhaft, 3 bis 10 Gewichtsprozent, bezogen auf das Styrolpolymerisat, an Treibmittel zu verwenden. Bezüglich weiterer Einzelheiten sei auf das Kunststoffhandbuch Band V, «Polystyrol», Carl-Hanser-Verlag, Kapitel 6 «Polystyrol-Schaumstoffe», insbesondere Seiten 679 bis 688, verwiesen.

Die Styrolpolymerisate liegen in Teilchenform vor, wobei die Teilchengröße vorteilhaft 0,1 bis 6,0 mm, insbesondere 0,4 bis 3 mm, beträgt.

Als Flammschutzmittel sind geeignet :

— 2,5-Bis-(tribrommethyl)-1,3,4-thiadiazol

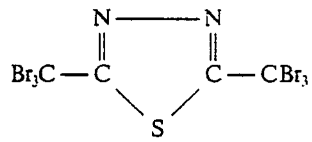

($A_1$)

— 1,1,2,3,4,4-Hexabrombuten-2

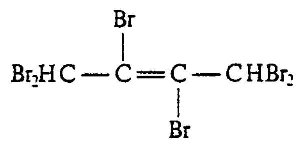

($A_2$)

— Pentabromphenylallyläther

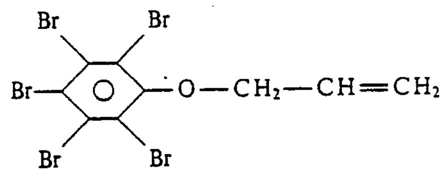

($A_3$)

— 2,4,6-Tris-(tribrommethyl)-1,3,5-triazin

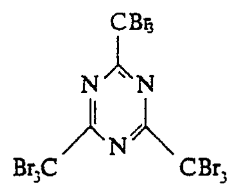

($A_4$)

— 1,2,5,6,9,10-Hexabromcyclododecan ($A_5$)

— Pentabrommonochlorcyclohexan ($A_6$)

Eine weitere Klasse von geeigneten Bromverbindungen sind bromierte Ketone, die im Molekül mindestens einmal die Gruppierung

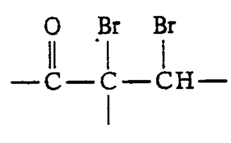

aufweisen, und die mindestens einen, vorzugsweise chlorierten Phenylsubstituenten tragen. Es hat sich dabei gezeigt, daß die chlorierten Produkte eine besonders gute UV-Stabilität aufweisen.

Bevorzugte bromierte Ketone sind :

Tetrabromdibenzalaceton

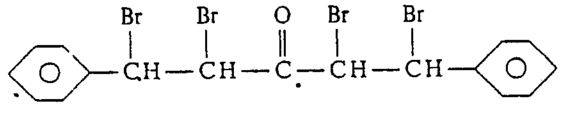

($A_7$)

Tetrabromdi-(4-chlor)-benzalaceton

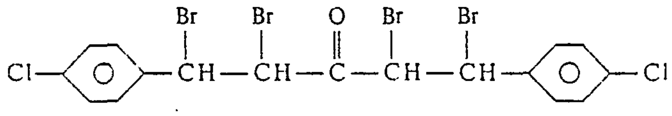

($A_8$)

Tetrabromdi-(2,4-dichlor)-benzalaceton ($A_9$)

Tetrabrom-4-chlor-benzalaceton

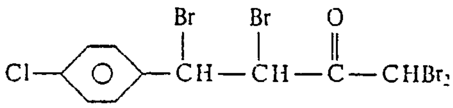

($A_{10}$)

Es hat sich gezeigt, daß solche Bromverbindungen besonders wirksam sind, bei denen die Abspaltung eines Bromatoms durch eine C=C-, C=O- oder C=N-Gruppe im Molekül aktiviert ist.

Die Bromverbindungen werden in Mengen von 0,05 bis 0,5 Gewichtsteilen, bezogen auf 100 Gewichtsteile der unbeschichteten, treibmittelhaltigen Teilchen, eingesetzt.

Als Flammschutzsynergisten werden organische Verbindungen mit labilen C—C-, O—O- und N=N-Bindungen verwendet. Ihre Halbwertszeit beim Zerfall, gemessen bei 100 °C in Benzol, ist größer als 5 Stunden.

Geeignete Synergisten mit einer labilen O—O-Bindung sind z. B. organische Peroxide oder Hydroperoxide, wie sie z. B. in der US-A-3 058 926, Spalte 3, Zeile 38 bis Spalte 4, Zeile 47, beschrieben ist. Besonders bevorzugt sind Dicumylperoxid, Di-tert.-butylperoxid und α,α'-Bis(tert.-butylperoxy)diisopropylbenzol.

Geeignete Synergisten mit einer labilen C—C-Bindung sind z. B. Di-cumyl oder ein Oligomeres des Diisopropylbenzols, wie sie in den DE-B-1 255 302, 1 272 533 oder 2 338 709 beschrieben sind, sowie 1,1'-Diphenylbicyclohexyl und 1,1'-Diphenylbicyclopentyl nach der DE-B-2 525 697.

Geeignete Synergisten mit einer labilen N=N-Bindung sind z. B. Azodiisocyclohexannitril und 2,2-Dimethyl-(2,2-Azobutan), wie sie in der GB-A-1 015 217 und in der DE-A-2 320 535 beschrieben sind.

Die bevorzugt genannten Flammschutzsynergisten zeichnen sich dadurch aus, daß sie bei der Polymerisation von Styrol nicht stören. Sie beeinflussen auch die Produkt- und Verarbeitungseigenschaften der treibmittelhaltigen Styrolpolymerisate nicht negativ und haben keinen störenden Einfluß auf die Zellstruktur der daraus hergestellten Schaumstoffe.

Die Synergisten sind vorzugsweise in Mengen von 0,01 bis 1,0, insbesondere von 0,03 bis 0,5 Gewichtsprozent, in den treibmittelhaltigen Teilchen inkorporiert.

Das Einarbeiten der Flammschutzsynergisten in die Styrolpolymerisat-Teilchen kann auf verschiedene Weise erfolgen : Man kann sie bereits bei der Herstellung der Styrolpolymerisate durch Polymerisation der Monomeren dem Polymerisationsansatz zufügen, und zwar vor, während oder gegen Ende des Polymerisationszyklus. Sie zerfallen bei den dabei gewöhnlich angewandten Temperaturen von etwa 100 bis 120 °C und der Polymerisationsdauer von etwa 2 bis 12 Stunden kaum, so daß sie in den fertigen Teilchen enthalten sind und dort wirksam werden können. Eine andere Möglichkeit ist, die Synergisten einer Schmelze des Styrolpolymerisats zuzusetzen, sie also z. B. gemeinsam zu extrudieren. Man kann schließlich auch die Styrolpolymerisat-Teilchen in wäßriger Suspension bei erhöhter Temperatur mit dem Synergisten, gegebenenfalls zusammen mit dem Treibmittel, imprägnieren.

Die Bromverbindung wird auf die Styrolpolymerisat-Teilchen, die Treibmittel und Flammschutzsynergisten enthalten, durch oberflächliches Beschichten aufgebracht. Dies geschieht durch einfaches Auftrommeln.

In manchen Fällen kann es zweckmäßig sein, die expandierbaren Teilchen zusätzlich noch mit üblichen Mitteln zur Verkürzung der Entformzeit zu beschichten, beispielsweise mit Glyzerinmonostearat oder mit Urethanen. Um ein Verbacken oder Verkleben der beschichteten Teilchen bei der Weiterverarbeitung zu verhindern, ist es vorteilhaft, zusätzlich noch Antiverklebungsmittel auf die Teilchen aufzubringen. Besonders geeignet dafür ist feinteilige Kieselsäure, die vorzugsweise in Mengen von 0,005 bis 0,1 Gewichtsteilen, bezogen auf 100 Gewichtsteile der treibmittelhaltigen Styrolpolymerisate, eingesetzt wird. Kieselsäure hat den Vorteil, daß es die flammhemmende Wirkung der organischen Bromverbindung nicht nachteilig beeinflußt. Man kann jedoch grundsätzlich auch andere bekannte Antiverklebemittel einsetzen, z. B. Zinkstearat. Ebenfalls als Antiverklebemittel geeignet ist Calciumcarbonat. Es hat sich darüber hinaus gezeigt, daß diese Verbindung sowie auch andere Salze, Oxide und Hydroxide von Erdalkalimetallen die durch die Bromverbindungen verursachte Korrosion an Verarbeitungsmaschinen verhindern. Es ist zweckmäßig, bei der Beschichtung der Styrolpolymerisat-Teilchen mit den Flammschutzmitteln Stabilisatoren gegen Lichteinwirkung zuzusetzen. Dabei haben sich vor allem N-Hydroxyphenylbenzotriazole oder Hydroxybenzophenone bewährt, gegebenenfalls im Gemisch mit sterisch gehinderten Phenolen und/oder Dialkylzinndicarboxylaten. Derartige Stabilisatorsysteme sind ausführlich in der deutschen Patentanmeldung P 2 757 020 beschrieben. Die Stabilisatoren werden bevorzugt in Mengen von 0,005 bis 1,0 Gewichtsteilen, bezogen auf 100 Gewichtsteile der unbeschichteten Teilchen, angewandt.

Die Formmassen können noch weitere Komponenten enthalten, z. B. Füllstoffe, Farbpigmente, Gleitmittel, Antistatika, Alterungsschutzmittel oder solche Verbindungen, welche die Schaumbildung fördern.

Die erfindungsgemäßen Formmassen können zur Herstellung von selbstverlöschenden Schaumstoffen mit einem Raumgewicht von 5 bis 100, vorzugsweise 10 bis 50 g/l verwendet werden. Das Aufschäumen geschieht durch Expansion der Treibmittel bei erhöhten Temperaturen, z. B. durch Versintern in Formen oder durch Strangpressen.

Die in den Beispielen genannten Teile und Prozente beziehen sich auf das Gewicht.

## Beispiel 1

a) Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 7 Teilen n-Pentan, 0,45 Teilen Benzoylperoxid und 0,15 Teilen tert.-Butylperbenzoat (als Polymerisationsinitiatoren) sowie 0,1 Teile verschiedener Synergisten unter Rühren auf 90 °C erhitzt. Nach 2 Stunden bei 90 °C wurden 4 Teile einer 10 prozentigen wäßrigen Lösung von Polyvinylpyrrolidon zugegeben. Dann wurde weitere 2 Stunden bei 90 °C, anschließend 2 Stunden bei 100 °C und schließlich 2 Stunden bei 120 °C gerührt. Das erhaltene Granulat mit einem mittleren Teilchendurchmesser von 1,5 mm wurde isoliert und getrocknet.

b) Beschichtung

100 Teile des expandierbaren Polystyrol-Granulats wurden durch Auftrommeln im Schaufelmischer jeweils drei Minuten lang mit verschiedenen Mengen verschiedener Flammschutzmittel sowie mit 0,4 Teilen Glyzerinmonostearat und 0,1 Teilen eines Stabilisatorgemisches aus 73 % 2-(2-Hydroxy-3,5-di-tert.-butylphenyl)-5-chlorbenzotriazol, 15 % 1,6-Hexandiol-bis-3-(3,5-di-tert.-butyl-4-hydroxyphenyl)-propionat und 12 % Dibutylzinndilaurat beschichtet.

c) Schaumstoff-Herstellung

Durch Einwirkung von Wasserdampf wurden die expandierbaren, beschichteten Polystyrol-Teilchen geschäumt und nach eintägiger Lagerung durch weitere Behandlung mit Wasserdampf in einer geschlossenen Form zu Schaumstoff-Blöcken verschweißt.

d) Prüfung

Aus den Schaumstoffblöcken wurden mit einem beheizten Draht Streifen der Abmessung 2 × 20 × 40 cm herausgeschnitten. Die Messung der Nachbrennzeit erfolgte an unter 45° geneigten Streifen, die am unteren Ende mit einer leuchtenden Erdgasflamme entzündet wurden. Die Zeit bis zum Erlöschen der Flamme wurde gemessen und der Mittelwert aus 20 Einzelmessungen bestimmt.

Ergebnis siehe Tabelle.

Tabelle

| Versuch | Synergist | Flammschutzmittel Teile | Art | Nachbrennzeit sec. |
|---|---|---|---|---|
| 1 | DCP | 0,05 | $A_1$ | 5,3 |
| 2 | DCP | 0,1 | $A_1$ | 2,4 |
| 3 | DCP | 0,2 | $A_1$ | 0,9 |
| 4 | DTP | 0,1 | $A_1$ | 4,4 |
| 5 | DC | 0,1 | $A_1$ | 4,7 |
| 6 | DCP | 0,2 | $A_2$ | 1,8 |
| 7 | DCP | 0,4 | $A_3$ | 1,8 |
| 8 | DCP | 0,1 | $A_4$ | 2,0 |

DCP bedeutet Dicumylperoxid,
DTP bedeutet Di-tert.butylperoxid,
DC bedeutet Dicumyl,
$A_1$-$A_4$ sind die in der Beschreibung aufgeführten Flammschutzmittel.

Beispiel 2

Teilchen aus expandierbarem Polystyrol mit 7 Gew.-% Pentan und 0,05 Gew.-% inkorporierten α,α'-Bis-(tert.butylperoxy)-diisopropylbenzol wurden in einem Schaufelmischer mit 0,4 % Glyzerinmonostearat und 0,40 % der Bromverbindung $A_{10}$ beschichtet. Die Teilchen wurden verschäumt und zu einem Schaumstoff-Block mit Raumgewicht 10 g/l versintert. An Probekörpern wurde der Brandtest nach DIN 4102 durchgeführt, wobei sowohl der B1- als auch der B2-Test bestanden wurde. Bei einer Prüfung auf UV-Beständigkeit durch 70 stündiges Bestrahlen eines 0,4 × 8 × 40 cm großen Schaumstoffstreifens mit einem Flachbelichter zeigte sich nur eine sehr geringe Abnahme der Viskositätszahl.

**Patentansprüche**

1. Teilchenförmige treibmittelhaltige Styrolpolymerisate, die 2,5-Bis-(tribrommethyl)-1,3,4-thiadiazol, 1,1,2,3,4,4-Hexabrombuten-2, Pentabromphenylallyläther, 2,4,6-Tris-(tribrommethyl)-1,3,5-triazin, 1,2,5,6,9,10-Hexabromcyclododecan, Pentabrommonochlorcyclohexan oder ein bromiertes Keton, welches im Molekül mindestens einmal die Gruppierung

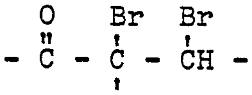

aufweist, in einer Menge von 0,05 bis 0,5 Gew.-%, bezogen auf das treibmittelhaltige Styrolpolymerisat, als Flammschutzmittel und eine organische Verbindung mit labiler C—C-, O—O- oder N = N-Bindung mit einer Halbwertszeit beim Zerfall von größer als 5 Stunden, gemessen bei 100 °C in Benzol, als Flammschutzsynergist enthalten, dadurch gekennzeichnet, daß das Flammschutzmittel durch Auftrommeln oberflächlich auf den Teilchen aufgebracht ist, während der Flammschutzsynergist gleichmäßig in den Teilchen inkorporiert ist.

2. Teilchenförmige treibmittelhaltige Styrolpolymerisate nach Anspruch 1, dadurch gekennzeichnet, daß 0,01 bis 1,0 Gewichtsprozent Flammschutzsynergist in den Teilchen inkorporiert ist.

3. Teilchenförmige treibmittelhaltige Styrolpolymerisate nach Anspruch 1, dadurch gekennzeichnet, daß der Flammschutzsynergist Dicumylperoxid, Di-tert.-butylperoxid, α,α'-Bis-(tert.-butylperoxy)diisopropylbenzol ; Dicumyl oder ein Oligomeres des Isopropylbenzols ; Azodiisocyclohexannitril oder 2,2-Dimethyl-(2,2-Azobutan) ist.

4. Teilchenförmige treibmittelhaltige Styrolpolymerisate nach Anspruch 1, dadurch gekennzeichnet, daß die styrolpolymerisate als Treibmittel 3 bis 10 Gewichtsprozent einer flüssigen ode gasförmigen organischen Verbindung, welche das Polymerisat nicht löst und deren Siedepunkt unterhalb des Erweichungspunktes des Polymerisats liegt, enthalten.

5. Teilchenförmige treibmittelhaltige Styrolpolymerisate nach Anspruch 1, dadurch gekennzeichnet, daß die Teilchen einen Durchmesser von 0,1 bis 6 mm haben.

6. Verwendung der teilchenförmigen treibmittelhaltigen Styrolpolymerisate nach Anspruch 1 zur Herstellung von Schaumstoffen mit einem Raumgewicht von 5 bis 100 g/l.

**Claims**

1. A particulate expandable styrene polymer which contains from 0.05 to 0.5 % by weight of 2,5-bis-(tribromomethyl)-1,3,4-thiadiazole, 1,1,2,3,4,4-hexabromobut-2-ene, pentabromophenyl allyl ether, 2,4,6-tris-(tribromomethyl)-1,3,5 triazine, 1,2,5,6,9,10-hexabromocyclododecane, pentabromomonochlorocyclohexane or a brominated ketone which contains at least one

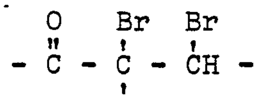

group in the molecule, as flameproofing agent, and an organic compound possessing a labile C—C, O—O or N = N bond and having a decomposition half-life, measured at 100 °C in benzene, of more than 5 hours, as synergistic agent for flameproofing, characterized in that the flameproofing agent is applied to the surface of the particles by tumbling, whereas the synergistic agent is homogeneously incorporated into the particles.

2. A particulate expandable styrene polymer as claimed in claim 1, characterized in that from 0.01 to 1.0 % by weight of the synergistic agent is incorporated into the particles.

3. A particulate expandable styrene polymer as claimed in claim 1, characterized in that the synergistic agent is dicumyl peroxid, di-tert.-butyl peroxide, α,α'-bis-(tert.-butylperoxy)-diisopropylbenzene, dicumyl or an isopropylbenzene oligomer, azodiisocyclohexanonitrile or 2,2-dimethyl-(2,2-azobutane).

4. A particulate expandable styrene polymer as claimed in claim 1, characterized in that the styrene polymer contains, as expanding agent, from 3 to 10 % by weight of a liquid or gaseous organic compound which does not dissolve the polymer and which boils below the softening point of the polymer.

5. A particulate expandable styrene polymer as claimed in claim 1, characterized in that the particles have a diameter of from 0.1 to 6 mm.

6. Use of the particulate expandable styrene polymer as claimed in claim 1 for the production of foams having a density of from 5 to 100 g/l.

## Revendications

1. Polymères de styrène en petites particules, à teneur en agent d'expansion (gonflant), qui contiennent, comme agent de protection contre les flammes à raison de 0,05 à 0,5 % en poids, par rapport au polymère de styrène à teneur en gonflant, du 2,5-bis-(tribromométhyl)-1,3,4-thiadiazone, 1,1,2,3,4,4-hexabromobutène-2, pentabromophénylallyléther, 2,4,6-tris-(tribromométhyl)-1,3,5-triazine, 1,2,5,6,9,10-hexabromocyclododécane, pentabromomonochlorocyclohexane ou une cétone bromée qui comporte dans sa molécule au moins une fois le groupement

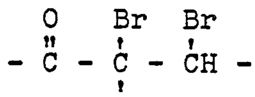

et, comme synergiste de protection contre les flammes, un composé organique à liaison labile C—C—, O—O— ou N = N— ayant une demi-vis par désintégration de plus de 5 heures, mesurée à 100 °C dans le benzène, caractérisés par le fait que l'agent de protection contre les flammes est appliqué superficiellement sur les petites particules par enduction au tonneau pendant que le synergiste de protection contre les flammes est incorporé uniformément dans les particules.

2. Polymères de styrène en petites particules, à teneur en agent d'expansion (gonflant), selon la revendication 1, caractérisés par le fait que l'on incorpore 0,01 à 1,0 % en poids de synergiste de protection contre les flammes dans les particules.

3. Polymères de styrène en petites particules, à teneur en agent d'expansion (gonflant), selon la revendication 1, caractérisés par le fait que le synergiste de protection contre les flammes est du dicumylperoxyde, di-tert.-butylperoxyde, $\alpha,\alpha'$-bis-(tert.-butylperoxy)diisopropylbenzène, dicumyle ou un oligomère d'isopropylbenzène ; azodiisocyclohexannitrile ou 2,2-diméthyl-(2,2-azobutane).

4. Polymères de styrène en petites particules, à teneur en agent d'expansion (gonflant), selon la revendication 1, caractérisés par le fait que les polymères de styrène contiennent, comme agent d'expansion (gonflant) 3 à 10 % en poids d'un composé organique liquide ou gazeux, qui ne dissout pas le polymère et dont le point d'ébullition est inférieur au point de ramollissement du polymère.

5. Polymères de styrène en petites particules, à teneur en agent d'expansion (gonflant), selon la revendication 1, caractérisés par le fait que les particules ont un diamètre de 0,1 à 6 mm.

6. Utilisation des polymères de styrène en petites particules, à teneur en agent d'expansion (gonflant), selon la revendication 1, pour la préparation de produits expansés d'un poids spécifique de 5 à 100 g/l.